# EUROPÄISCHE PATENTSCHRIFT

(11) **EP 2 683 951 B1**
(45) Veröffentlichungstag und Bekanntmachung des Hinweises auf die Patenterteilung: **17.05.2017**
(21) Anmeldenummer: 12727230.0
(22) Anmeldetag: 22.02.2012
(51) Int. Cl.: F15B 21/00, F16K 15/14, F16K 17/196

(54) **SCHWINGUNGSDÄMPFER FÜR HYDRAULISCHE SYSTEME**
VIBRATION DAMPER FOR HYDRAULIC SYSTEMS
AMORTISSEUR DE VIBRATIONS POUR SYSTÈMES HYDRAULIQUES

(30) Priorität: 09.03.2011 DE 102011013454
(43) Veröffentlichungstag der Anmeldung: 15.01.2014
(73) Patentinhaber: Schaeffler Technologies AG & Co. KG, 91074 Herzogenaurach (DE)
(72) Erfinder: INEICHEN, Laurent, F-67100 Strasbourg (FR); BERTHELEMY, Pierre-Yves, F-67000 Strassbourg (FR); WELTER, Roland, 77815 Bühl (DE); GRABENSTÄTTER, Jan, 76593 Gernsbach (DE)
(86) Internationale Anmeldenummer: PCT/DE2012/000163
(87) Internationale Veröffentlichungsnummer: WO 2012/119576

(56) Entgegenhaltungen:
- DE-A1- 10 022 811
- DE-A1- 10 106 958
- DE-U1- 29 624 637
- SE-C- 153 362

## Beschreibung

Die Erfindung bezieht sich auf eine Vorrichtung zur Dämpfung von Druckschwingungen innerhalb einer hydraulischen Strecke gemäß Oberbegriff des Anspruchs 1.

Eine Vorrichtung zur Dämpfung von Druckschwingungen, die nach Art eines Schlauchventils abreitet, ist in der DE 101 06 958 gezeigt. Dieses Schlauchventil benötigt aber relativ viel axialen Bauraum. Darüber hinaus ist zur Abdichtung der mittels des Schlauchs verschlossenen Öffnung im Ventil ein relativ großer Anpressdruck des Schlauchs auf dem innen bzw. außen liegenden Rohr notwendig, so dass die notwendige Betätigungskraft des hydraulischen Systems relativ stark ansteigt und aufgrund von Toleranzen im Material und Herstellung erheblich schwankt. Auch weisen Schlauchventile eine Grundleckage auf, die schwierig zu beherrschen ist.

Darüber hinaus ist die Wirkung einer derartigen Vorrichtung zur Dämpfung von Druckschwingungen aufgrund der Wirkungsweise begrenzt. Trifft im Betrieb eine Druckschwingung auf das Ventil, so wird es kurzzeitig geöffnet. Die dafür notwendige Arbeit wird der Schwingung entzogen, so dass sich die Druckamplitude verringert und die Schwingung gedämpft wird. Bei höherfrequenten Schwingungen reicht aber die Zeit zwischen den einzelnen Schwingungen nicht mehr aus, damit sich das Ventil wieder schließen kann. Der Schwingungsdämpfer verliert also seine Wirkung. Bei den bekannten Schwingungsdämpfern ist dies in der Regel ab Frequenzen von 80 Hz der Fall. Die DE 296 24 637 U1 offenbart eine hydraulische Betätigungsvorrichtung mit einer Dämpfungseinrichtung, die in der hydraulischen Strecke zwischen einem Geber- und einem Nehmerzylinder angeordnet ist. Die Dämpfungseinrichtung weist hierbei einen federbeaufschlagten Ventilkörper auf, der die Strömungsgeschwindigkeit der hydraulischen Flüssigkeit anpassen bzw. verlangsamen kann. Die DE 100 22 811 A1 beschreibt ein mit einer Schraubenfeder ausgestaltetes Ventil für eine Kolbenpumpe. Die im Stand der Technik bekannten Lösungen weisen unter anderem den Nachteil auf, dass ein großer axialer Bauraum benötigt wird.

Es stellt sich daher die Aufgabe, eine Vorrichtung zur Dämpfung von Druckschwingungen innerhalb einer hydraulischen Strecke zur Verfügung zu stellen, die nur einen geringen axialen Bauraum benötigt, einfach und kostengünstig hergestellt werden kann, die notwendige Betätigungskraft des hydraulischen Systems nicht wesentlich erhöht und in einem möglichst breiten Frequenzband Wirkung zeigt. Die Lösung dieser Aufgabe gelingt mit einer Vorrichtung zur Dämpfung von Druckschwingungen gemäß Anspruch 1. Vorteilhafte Weiterbildungen ergeben sich aus den Unteransprüchen.

Eine hydraulische Strecke weist einen Geber- und einen Nehmerzylinder auf, die über eine von einem Fluid durchströmte Druckleitung hydraulisch miteinander verbunden sind. Bei Betätigung des Geberzylinders wird der Zylinderkolben in den Zylinder eingeschoben, so dass Fluid verdrängt und der Druck im hydraulischen System erhöht wird. Durch die Druckerhöhung und die Fluidverdrängung wird über die Druckleitung im Geberzylinder ein entsprechender Druck aufgebaut, so dass durch den Druckanstieg und das in dem Nehmerzylinder zufließende Fluid der Kolben entsprechend aus dem Zylinder gepresst wird. Durch die Verbindung der Zylinder über die Druckleitung mit dem Hydraulikfluid können Schwingungen, die beispielsweise aus dem Getriebe oder der Kupplung auf den Nehmerzylinder einwirken, über das Fluid in der Druckmittelleitung auf den Geberzylinder und die mit ihm verbundene Betätigungseinrichtung, beispielsweise ein Kupplungspedal, übertragen werden, was zu unangenehmen Vibrationen im Kupplungspedal oder zu unerwünschten Geräuschen wie Pfeifen führen kann.

Eine derartige Schwingungsübertragung kann sowohl bei stattfindendem Fluidfluss als auch bei stehendem Geberzylinder, das heißt entweder im drucklosen oder im ganz oder teilweisen eingerückten Zustand, auftreten.

Zur Schwingungsdämpfung in Betriebszuständen ohne Fluidfluss weist eine Vorrichtung zur Schwingungsdämpfung zwei Zugfederventile auf, wobei das eine Zugfederventil mit Durchlassrichtung zum Nehmerzylinder hin und das andere Zugfederventil mit Durchlassrichtung zum Geberzylinder ausgebildet ist. Ein derartiges Zugfederventil besteht im Wesentlichen aus einer Schraubenfeder, die derart ausgebildet ist, das die einzelnen Windungen der Schraubenfeder im unbelasteten Zustand aufeinander zu liegen kommen. Die Schraubenfeder des Zugfederventils bildet also im unbelasteten Zustand einen Zylindermantel aus. Wird nun dieser Zylindermantel auf einer Seite verschlossen, so bildet er einen Innenraum aus, der lediglich nach einer Seite geöffnet ist. Unter Zugbelastung wird die Feder eine Verlängerung erfahren, so dass sich die Windungen der Schraubenfeder voneinander entfernen und der Innenraum der Zugfeder im Bereich des Zylindermantels geöffnet wird. Die Feder kann dabei eine Vorspannung aufweisen, d.h. erst bei Überschreitung einer bestimmten Zugbelastung findet eine Verlängerung statt. Das offene Ende der Schraubenfeder wird in einer Blende gelagert, die eine Blendenöffnung komplementär zum Durchmesser der Schraubenfeder aufweist. Diese Blende kann dann im Fluid-Durchflussweg des hydraulischen Systems angeordnet werden und bildet so zusammen mit der Zugfeder ein Ventil. Wenn nun eine Druckdifferenz im Fluid auf beiden Seiten des Zugfederventils auftritt, ergibt sich eine entsprechende Druckkraft auf die Blende und das Ventil, insbesondere auf die verschlossene Seite des Ventils.

Durch diese Druckkraft entsteht eine entsprechende Normalkraft in der Feder, die entweder in Zug- oder in Druckrichtung der Feder gerichtet sein kann. Bei einer Kraft in Druckrichtung der Feder werden die Windungen stärker zusammen gepresst, was die Dichtigkeit des Ventils erhöht. Es handelt sich also bei dieser Kraftrichtung um die Schließrichtung des Ventils. Bei einer resultierenden Kraft in Zugrichtung der Feder findet eine Verlängerung der Feder statt, wodurch die einzelnen Windungen der Feder voneinander abgehoben werden und Zwischenräume entstehen, durch die das Fluid hindurch fließen kann. Diese Kraftrichtung entspricht also der Öffnungsrichtung des Ventils.

Die Anordnung der Zugfederventile erfolgt dabei als Parallelschaltung. Hierbei ist es beispielsweise möglich, die Zugfederventile ineinander zu schachteln, das heißt, ein äußeres Zugfederventil in eine Blende einzusetzen, die im Durchflussweg angeordnet ist, wobei die verschlossene Seite dieses ersten Zugfederventils eine Blendenöffnung aufweist, die wiederum mit einem entgegen gesetzt gerichteten Zugfederventil in Verbindung steht, bzw. in Durchlassrichtung des ersten Zugfederventils abgedichtet ist.

Bei geschlossenen Ventilen, also bei gleichen Druckverhältnissen auf beiden Seiten der Ventile, kann nun eine Dämpfung der Schwingung wie oben beschrieben stattfinden. Durch die Verwendung der Federn als Ventilkörper ergibt sich im Vergleich zu den oben erwähnten Schlauchventilen oder zu ebenfalls im Stand der Technik üblichen Rückschlagventilen mit Kugelkörper eine vergleichsweise geringe bewegte Masse. Dadurch zeichnet sich der Schwingungsdämpfer gemäß der vorliegenden Erfindung durch eine hohe Dynamik aus, der Öffnungs- und Schließvorgang erfolgt also erheblich schneller als bei derzeit üblichen Schwingungsdämpfern. Damit kann der vorliegende Schwingungsdämpfer seine Wirkung bis zu erheblich höheren Frequenzen beibehalten.

Hinsichtlich der Ausführung der Federn ergeben sich weitere Variationsmöglichkeiten. So können die Federn mit einer Beschichtung versehen sein, beispielsweise aus Gummi oder einem elastischen Kunststoff, um derart die Dichtigkeit zu verbessern und/oder Geräusche bei der Betätigung der Ventile zu minimieren. Weiterhin kann auch der Querschnitt des Drahtes, der für die Federn verwendet wird, zur Verbesserung der Dichtheit des Ventils angepasst werden. So ist es beispielsweise denkbar, die Querschnittform des Drahtes rechteckig oder mehreckig, beispielsweise hexagonal, auszuführen, um so eine größere Dichtfläche zwischen den einzelnen Federwindungen zu erreichen. Die Federn können auch mit einer inneren Federspannung ausgeführt werden, sodass zur Verlängerung der Feder die eingeprägte Vorspannkraft überwunden werden muss und somit eine erhöhte Anpressung der Federwindungen aneinander zur Erhöhung der Dichtigkeit erreicht wird.

Weitere Merkmale, Merkmalskombinationen, Eigenschaften und Vorteile der Erfindung werden deutlich anhand der Beschreibung einiger bevorzugter Ausführungsbeispiele und Zeichnungen:
- Figur 1: eine Schnittdarstellung einer Schwingungsdämpferanordnung gemäß der vorliegenden Erfindung mit einem Gehäuse, das zur Anordnung in einem äußeren Gehäuse ausgebildet ist, und mit einem Zugfederventil, das im Innenraum eines weiteren Zugfederventils angeordnet ist;
- Figur 2: eine nicht erfindungsgemäße Schnittdarstellung, bei der zwei Zugfederventile parallel zueinander angeordnet sind;
- Figur 3: eine Schnittdarstellung einer weiteren Ausführungsform der Erfindung mit einem Gehäuse mit Konnektoren zum direkten Anschluss an eine Druckleitung.

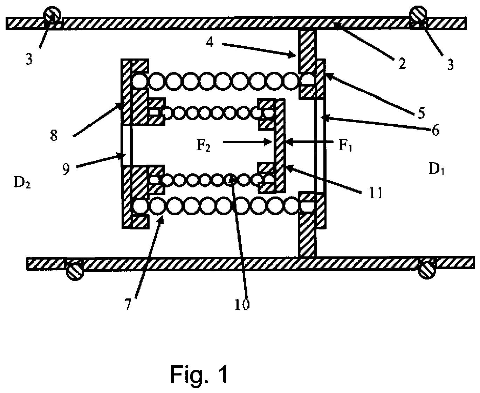

Figur 1 zeigt einen erfindungsgemäßen Schwingungsdämpfer 1 mit einem Gehäuse 2, das an seinem äußeren Umfang zwei Nuten mit darin angeordneten Dichtringen 3 aufweist. Die Ausführungsform in Figur 1 eignet sich also dazu, in ein Gehäuse eingesetzt zu werden, das im Durchflussweg einer hydraulischen Strecke angeordnet ist. Beispielsweise ergibt sich die Möglichkeit, den Schwingungsdämpfer gemäß der Figur 1 direkt in den Geberzylinder einzusetzen, um so mögliche Schwingungen besonders effektiv zu dämpfen. Alternativ ist es natürlich ebenso möglich, eine erfindungsgemäßen Schwingungsdämpfer mit eigenem Gehäuse auszuführen und mit entsprechenden Konnektoren zu versehen, die zur Verbindung mit einer Druckleitung einer hydraulischen Strecke und/oder mit einem Geber- oder Nehmerzylinder ausgebildet sind.

Im Inneren des Gehäuses 2 des Schwingungsdämpfers 1 befindet sich die Blende 4, die eine Blendenöffnung 6 aufweist. In Blendenöffnung 6 ist die Zugfeder 7 angeordnet, die mittels des Klemmrings 5 in der Blende gehalten ist. Das der Blende 4 gegenüber liegende Ende der Zugfeder 7 ist mit einem Deckel 8 versehen, der gleichzeitig als Blende für das zweite Ventil 10 dient. Der Deckel 8 verfügt über eine Blendenöffnung 9, an der das Federventil 10 gehalten ist. Das der Blendenöffnung 9 gegenüber liegende Ende der Feder 10 ist mit einem Deckel 11 verschlossen. Somit befinden sich zwei voneinander abgeschlossene Druckräume D1 und D2 auf den Seiten der Blende 4 bzw. Ventile 7 und 10. Je nach Betriebszuständen, die in den Druckräumen vorherrschen, können Drücke in D1 und D2 gleich groß, in D1 größer als in D2 oder in D2 größer als in D1 sein. Wenn der Druck in D1 größer als in D2 ist, entsteht eine resultierende Kraft F1 auf die Federn 7 und 10, die dafür sorgt, dass die Feder 10 zusammen - und die Feder 7 auseinander gedrückt wird, sodass hydraulisches Fluid von der Druckseite D1 zwischen den Windungen der Feder 7 auf die Druckseite D2 fließen kann. Ist der Druck auf der Seite D2 größer als auf der Seite D1, entsteht eine resultierende Kraft F2 auf die Federn 10 und 7, welche die Feder 7 zusammen- und die Feder 10 auseinander drückt, sodass hydraulisches Fluid zwischen den Windungen der Feder 10 hindurch durch Blendenöffnung 6 in den Druckraum D1 fließen kann. Bei gleichem Druck auf beiden Seiten sind beide Federventile 7 und 10 geschlossen, das heißt die Windungen der Federn liegen aufeinander auf, sodass keine Verbindung zwischen den Druckräumen D1 und D2 besteht und Schwingungen nicht übertragen werden können.

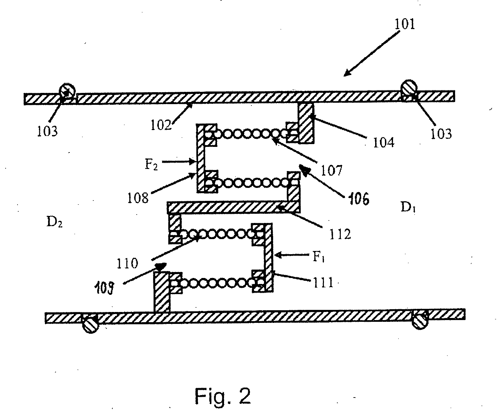

Figur 2 zeigt eine alternative, nicht erfindungsgemäßeAusführungsform eines Schwingungsdämpfers 101 mit einem Gehäuse 102 und Dichtungen 103, die in Nuten auf der Außenseite des Gehäuses 102 eingesetzt sind. Analog zum Schwingungsdämpfer 1 aus Figur 1 kann auch beim Schwingungsdämpfer 101 aus Figur 2 das Gehäuse, wie in der Figur dargestellt, zum Einsetzen in ein Außengehäuse, beispielsweise einen Geberzylinder, ausgebildet sein oder ein geschlossenes Gehäuse mit Konnektoren zur Verbindung mit einer hydraulischen Druckleitung verwenden werden. Im Gehäuseinneren befindet sich die Blende 104, die mit zwei Blendenöffnungen 106, 109 versehen ist. Zur Verringerung des benötigten axialen Bauraums des Schwingungsdämpfers weist die Blende eine Stufe 112 auf, die einen Versatz in der Blende bewirkt, der ungefähr der Länge der Federn 107, 110 im verlängerten Zustand entspricht. Damit lässt sich der axiale Raumbedarf des Schwingungsdämpfers gegenüber einer Blende ohne Versatz nahezu halbieren.

Analog zur ersten Ausführungsform in Figur 1 sind Federn 107, 110 so an den Blendenöffnungen 106, 109 befestigt, dass sie sich jeweils parallel zur Stufe 112 erstrecken. Die von den Blendenöffnungen 106, 109 abgewandten Enden der Federn 107, 110 sind mit Deckeln 108, 111 dicht verschlossen, sodass sich ein zur Blende geöffneter zylindrischer Innenraum ergibt.

Auch bei dieser Ausführungsform werden getrennte Druckräume D1, D2 ausgebildet. Im Zustand Druckkraft im Druckraum D1 größer als Druckkraft im Druckraum D2 ergibt sich eine resultierende Kraft F1, die bei dem Federventil 109 als Druckkraft auf die Feder wirkt, und bei dem Federventil 107 als Zugkraft. Dementsprechend wird das Federventil 110 dichtend zusammen gepresst, während beim Federventil 107 eine Verlängerung der Feder eintritt und somit die Windungen der Feder 107 voneinander abgehoben werden, sodass Fluid aus dem Druckraum D1 in den Druckraum D2 fließen kann. Bei einem Druck im Druckraum D2 größer als der Druck im Druckraum 1 ergibt sich eine resultierende Kraft F2, die bei der Feder 107 als Druck- und bei der Feder 107 als Zugkraft wirkt. In diesem Fall wird also die Feder 107 dichtend zusammen gepresst, während die Feder 110 verlängert wird, sodass sich die Windungen voneinander abheben und ein Fluidfluss aus dem Druckraum D2 in den Druckraum D1 stattfinden kann. Bei gleichem Druck in den Druckräumen D1 und D2 sind bei beiden Federn 107, 110 die Windungen in Anlage zueinander, sodass eine Trennung der Druckräume D1, D2 stattfindet und Schwingungen wirkungsvoll an der Weiterleitung gehindert werden.

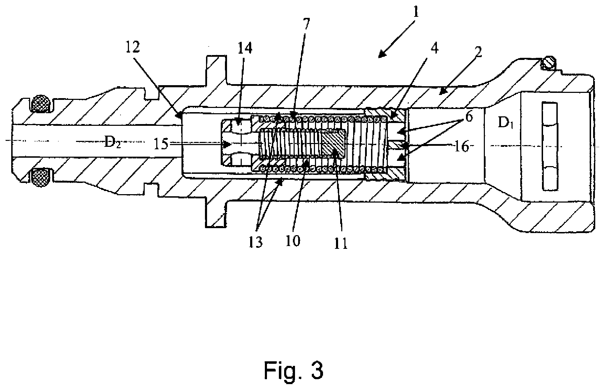

Fig. 3 zeigt eine alternative Ausführungsform des in Fig. 1 dargestellten Schwingungsdämpfers mit geschlossenem Gehäuse und Konnektoren an Ein- und Ausgang. An der Blende 4 ist eine Zugfeder 7 befestigt. Das andere Ende der Zugfeder 7 hält eine als Deckel 8 ausgebildete Federaufnahme. Innerhalb der Zugfeder7 befindet sich die Zugfeder 10, deren eine Seite von dem Deckel 8 gehalten wird und deren andere Seite mit dem Deckel 11 verschlossen ist.

Ist eine gewisse Druckschwelle auf der Seite des Druckraums D1 überwunden, wird die Zugfeder 7 gegen deren Vorspannung in Richtung Gehäuseanschlag 12 aufgedrückt, wodurch die Windungen der Zugfeder 7 voneinander abheben. Der Deckel 8 kann hierbei maximal bis zum Gehäuseanschlag 12 geschoben werden. Das Fluid strömt nun von der Druckseite D1 durch die Blendenöffnungen 6 in der Blende 4, zwischen den Windungen der Zugfeder 7, über im Gehäuse befindlichen Kanäle 13, durch Querbohrungen 14 und Längsbohrung 15 zum Druckraum D2.

Wird ein Druck auf der Seite des Druckraums D2 aufgebaut und überwindet dieser die Vorspannung der Zugfeder 10, so heben deren Windungen voneinander ab. Der Verschluss 11 der Zugfeder 10 kann hierbei maximal bis zum Anschlag 16 in der Blende 4 geschoben werden. Das Fluid strömt nun vom Druckraum D2 durch die Längsbohrung 15 zwischen den Windungen der Zugfeder 10 über die Öffnungen 6 in der Blende 4 zum Druckraum D1.

### Bezugszeichenliste

- 1: Schwingungsdämpfer
- 2: Gehäuse
- 3: Dichtring
- 4: Blende
- 5: Klemmring
- 6: Blendenöffnung
- 7: Zugfeder
- 8: Deckel
- 9: Blendenöffnung
- 10: Ventil
- 11: Deckel
- 12: Anschlag
- 13: Kanäle
- 14: Querbohrung
- 15: Längsbohrung
- 16: Anschlag
- 101: Schwingungsdämpfer
- 102: Gehäuse
- 103: Dichtung
- 104: Blende
- 106: Blendenöffnung
- 107: Federventil
- 108: Deckel
- 109: Blendenöffnung
- 110: Federventil
- 111: Deckel
- 112: Stufe

- D1: Druckraum
- D2: Druckraum
- F1: resultierende Kraft
- F2: resultierende Kraft

## Patentansprüche

1. Vorrichtung (1, 101) zur Dämpfung von Druckschwingungen innerhalb einer hydraulischen Strecke, wobei die hydraulische Strecke einen Geberzylinder und einen Nehmerzylinder, die über eine von einem Fluid durchströmte Druckleitung hydraulisch miteinander verbunden sind, umfasst, mit einem Gehäuse (2, 102), das eine Eintrittsöffnung, einen Durchflussweg und eine Austrittsöffnung für das hydraulische Fluid aufweist, und wobei zwei 2/2-Wege-Ventile parallel so im Durchflussweg angeordnet sind, dass die Durchlassrichtung zueinander jeweils entgegengesetzt gerichtet ist, wobei die 2/2-Wege-Ventile mit Schraubenfedern (7, 10, 107, 110) ausgebildet sind, **dadurch gekennzeichnet, dass** die einzelnen Windungen der Schraubenfedern (7, 10, 107, 110) im unbelasteten Zustand aneinander anliegen und einen geschlossenen Zylindermantel bilden, und eines der beiden Enden der Schraubenfedern (7, 10, 07, 110) jeweils dicht verschlossen ist, und **dadurch gekennzeichnet, dass** im Durchflussweg eine Blende (4, 104) angeordnet ist, die eine Öffnung aufweist, an der eine Schraubenfeder (7) zur Bildung eines Ventils angeordnet ist, und ein Ende dieser Schraubenfeder (7) mit einem Deckel (8) verschlossen ist, der ebenfalls eine Öffnung (9) aufweist, an der eine zweite Schraubenfeder (10) zur Bildung eines Ventils so angeordnet ist, dass die zweite Schraubenfeder (10) zumindest teilweise im Inneren der ersten Schraubenfeder (7) angeordnet ist.

2. Vorrichtung nach Anspruch 1, **dadurch gekennzeichnet, dass** die Windungen der Schraubenfedern (7, 10, 107, 110) beschichtet sind.

3. Vorrichtung nach Anspruch 2, **dadurch gekennzeichnet, dass** die Schraubenfedern (7, 10, 107, 110) mit Gummi und/oder Kunststoff beschichtet sind.

4. Vorrichtung nach einem der vorangehenden Ansprüche, **dadurch gekennzeichnet, dass** die Schraubenfedern (7, 10, 107, 110) aus einem Draht mit einem mehreckigen, insbesondere rechteckigen, Querschnitt hergestellt sind.

5. Vorrichtung nach einem der vorangehenden Ansprüche, **dadurch gekennzeichnet, dass** im Durchflussweg eine Blende (104) angeordnet ist, die zwei Öffnungen (106, 109) aufweist, an denen jeweils eine Schraubenfeder (107, 110) zur Bildung eines Ventils angeordnet ist.

## Claims

1. Apparatus (1, 101) for damping pressure oscillations within a hydraulic section, the hydraulic section comprising a master cylinder and a slave cylinder which are connected hydraulically to one another via a pressure line which is flowed through by a fluid, having a housing (2, 102) which has an inlet opening, a throughflow path and an outlet opening for the hydraulic fluid, and two 2/2-way valves being arranged in parallel in the throughflow path in such a way that the passage direction is directed in each case in an opposed manner with respect to one another, the 2/2-way valves being configured with helical springs (7, 10, 107, 110), **characterized in that** the individual windings of the helical springs (7, 10, 107, 110) bear against one another in the unloaded state and form a closed cylinder shell, and one of the two ends of the helical springs (7, 10, 107, 110) is closed in each case in a sealed manner, and **characterized in that** a plate (4, 104) is arranged in the throughflow path, which plate (4, 104) has an opening, at which a helical spring (7) for forming a valve is arranged, and one end of said helical spring (7) is closed by way of a cover (8) which likewise has an opening (9), at which a second helical spring (10) for forming a valve is arranged in such a way that the second helical spring (10) is arranged at least partially in the interior of the first helical spring (7).

2. Apparatus according to Claim 1, **characterized in that** the windings of the helical springs (7, 10, 107, 110) are coated.

3. Apparatus according to Claim 2, **characterized in that** the helical springs (7, 10, 107, 110) are coated with rubber and/or plastic.

4. Apparatus according to one of the preceding claims, **characterized in that** the helical springs (7, 10, 107, 110) are produced from a wire with a polygonal, in particular rectangular, cross section.

5. Apparatus according to one of the preceding claims, **characterized in that** a plate (104) is arranged in the throughflow path, which plate (104) has two openings (106, 109), at which in each case one helical spring (107, 110) for forming a valve is arranged.

## Revendications

1. Dispositif (1, 101) pour amortir les oscillations de pression à l'intérieur d'une section hydraulique, la section hydraulique comprenant un maître-cylindre et un cylindre récepteur qui sont reliés l'un à l'autre hydrauliquement par le biais d'une conduite de pression parcourue par un fluide, comprenant un boîtier (2, 102) qui présente une ouverture d'entrée, une voie d'écoulement et une ouverture de sortie pour le fluide hydraulique, dans lequel deux soupapes à 2/2 voies sont disposées en parallèle dans la voie d'écoulement de telle sorte que leur sens d'écoulement soient à chaque fois opposés, les soupapes à 2/2 voies étant réalisées avec des ressorts à boudin (7, 10, 107, 110),
**caractérisé en ce que**
les enroulements individuels des ressorts à boudin (7, 10, 107, 110) s'appliquent les uns contre les autres dans l'état non sollicité et forment une enveloppe cylindrique fermée, et l'une des deux extrémités des ressorts à boudin (7, 10, 107, 110) est à chaque fois fermée hermétiquement, et **caractérisé en ce que**
dans la voie d'écoulement est disposé un diaphragme (4, 104) qui présente une ouverture au niveau de laquelle est disposé un ressort à boudin (7) pour former une soupape, et une extrémité de ce ressort à boudin (7) est fermée avec un couvercle (8) qui présente également une ouverture (9) au niveau de laquelle est disposé un deuxième ressort à boudin (10) pour former une soupape de telle sorte que le deuxième ressort à boudin (10) soit disposé au moins en partie à l'intérieur du premier ressort à boudin (7).

2. Dispositif selon la revendication 1, **caractérisé en ce que** les enroulements des ressorts à boudin (7, 10, 107, 110) sont revêtus.

3. Dispositif selon la revendication 2, **caractérisé en ce que** les ressorts à boudin (7, 10, 107, 110) sont revêtus de caoutchouc et/ou de plastique.

4. Dispositif selon l'une quelconque des revendications précédentes, **caractérisé en ce que** les ressorts à boudin (7, 10, 107, 110) sont fabriqués à partir d'un fil métallique ayant une section transversale polygonale, en particulier rectangulaire.

5. Dispositif selon l'une quelconque des revendications précédentes, **caractérisé en ce que** dans la voie d'écoulement est disposé un diaphragme (104) qui présente deux ouvertures (106, 109) au niveau desquelles est disposé à chaque fois un ressort à boudin (107, 110) pour former une soupape.
